Europäisches Patentamt

European Patent Office

Office européen des brevets

(11) Veröffentlichungsnummer : **0 446 234 B1**

# (12) EUROPÄISCHE PATENTSCHRIFT

(45) Veröffentlichungstag der Patentschrift :
08.09.93 Patentblatt 93/36

(21) Anmeldenummer : 89912956.3

(22) Anmeldetag : 16.11.89

(86) Internationale Anmeldenummer :
PCT/EP89/01380

(87) Internationale Veröffentlichungsnummer :
WO 90/06251 14.06.90 Gazette 90/14

(51) Int. Cl.⁵ : **B60T 8/00**

(54) **VERFAHREN ZUR ERHÖHUNG DER BEHERRSCHBARKEIT EINES FAHRZEUGS.**

(30) Priorität : 01.12.88 DE 3840456

(43) Veröffentlichungstag der Anmeldung :
18.09.91 Patentblatt 91/38

(45) Bekanntmachung des Hinweises auf die
Patenterteilung :
08.09.93 Patentblatt 93/36

(84) Benannte Vertragsstaaten :
DE FR GB IT SE

(56) Entgegenhaltungen :
DE-A- 1 902 944
DE-A- 3 611 822
FR-A- 2 178 219
FR-A- 2 591 957
US-A- 3 910 647

(73) Patentinhaber : ROBERT BOSCH GMBH
Postfach 30 02 20
D-70442 Stuttgart (DE)

(72) Erfinder : RUF, Wolf-Dieter
Schlatthölzlesweg 17
D-7016 Waldstetten (DE)
Erfinder : HARTMANN, Uwe
Olgastrasse 79
D-7000 Stuttgart 1 (DE)
Erfinder : KOST, Friedrich
Johannes-Brahms-Strasse 1
D-7014 Kornwestheim (DE)
Erfinder : VAN ZANTEN, Anton
Waldstrasse 15/2
D-7257 Ditzingen 4 (DE)

(74) Vertreter : Kammer, Arno, Dipl.-Ing.
ROBERT BOSCH GmbH, Zentralabteilung
Patente, Postfach 30 02 20
D-70442 Stuttgart (DE)

EP 0 446 234 B1

Jouve, 18, rue Saint-Denis, 75001 PARIS

## Beschreibung

### Stand der Technik

Bei konventionellen ABS-Konzepten steht schon aus Gründen der Sensorik (Drehzahlfühler) die Längsdynamik des Fahrzeugs im Vordergrund. Erforderlich ist eine geeignete Abstimmung, um einen guten, aber invarianten Kompromiß zwischen Bremsweg und Beherrschbarkeit bei interschiedlichsten Fahrbahnen und Fahrmanövern zu erzielen.

Während bei einer Geradeaus-Bremsung der Wunsch des Fahrers nach maximaler Verzögerung in Fahrzeuglängsrichtung eindeutig erkennbar ist, entsteht bei gleichzeitigen Lenkbewegungen ein Zielkonflikt, da Bremskraft und Seitenführungskraft nicht gleichzeitig maximal sein können. Unterstellt man dem Fahrer den Wunsch, den Bewegungszustand seines Fahrzeuges momentan möglichst stark zu ändern, erscheint es plausibel, die sich aus Bremskraft und Seitenführungskraft ergebende resultierende Kraft zu maximieren. Bestehen keine Möglichkeiten, die Schräglaufwinkel durch einen aktiven Lenkungseingriff zu verändern, verbleibt als "schnelle Eingriffsmöglichkeit" der Reifenschlupf (in Längsrichtüng), der sich mit Hilfe der ABS-Ventile nach spätestens 100 - 200 ms auf einen neuen Sollwert einstellen läßt.

Aus der DE-A1-36 11 822 ist ein Antiblockierregelsystem bekannt, bei dem die Schlupfsollwerte an den einzelnen Achsen in Abhängigkeit vom Lenkwinkel und von der Gierbewegung variiert werden.

### Vorteile der Erfindung

Das Regelungskonzept unterscheidet sich von den nach dem Optmizer-Prinzip arbeitenden reinen Radreglern, die auf das Maximum der Bremskraft fixiert sind, schon dadurch, daß sich bei Schräglauf der Arbeitspunkt des Reglers nicht zu größeren Schlupfwerten verschiebt, sondern zunächst auf dem für die Geradeäus-Bremsung optimalen Wert gehalten und darüberhinaus an bestimmten Rädern der Schlupf abgesenkt wird. Vorgegeben wurde ein Fahrverhalten, das bei kleinen Geschwindigkeiten nahezu neutral und mit wachsender Geschwindigkeit zunehmend leicht Untersteuerungstendenzen aufweist:

Der Schräglaufwinkel an der Hinterachse wird auf einen Wert eingeregelt, der abhängig von der augenblicklichen Fahrzeuggescgwindigkeit - etwas kleiner als der Schräglaufwinkel der Vorderachse ist.

Dieses Konzept wird allerdings nur so lange beibehalten, wie die Schräglaufwinkel an den Vorderrädern aufgrund zu starken Lenkeinschlags (z.B. Panikreaktion des Fahrers) den maximal zulässigen Schräglaufwinkel nicht überschreiten. Da keine Möglichkeit besteht, den "überzogenen" Lenkwinkel auf ein geeignetes Maß zu reduzieren, werden in diesem Fall die Schräglaufwinkel der hinterachse auf den um den gewünschten "Untersteuerungsbeiwert" reduzierten, maximal zulässigen Schräglaufwinkel geregelt.

Der Eingriff dieses überlagerten Reglers in den unterlagerten Radregler erfolgt durch einen von den Schräglaufwinkel $\alpha_1$ - $\alpha_4$ abhängigen Schlupfsollwert $\lambda*_1$ - $\lambda*_4$. Vor der Berechnung dieser Schlupfsollwerte werden die folgenden drei Fahrsituationen unterschieden. Dabei kann der unterlagerte Regler die Struktur der Schlupfregler haben, die u.a. in den DE-OS 3624007, 3731075 und 3734878 beschrieben sind. Daneben sind direkte Eingriffsmöglichkeiten (über Ventilöffnungszeiten oder Differenzdrücke bei gemessenem Radbremszylinderdruck) möglich.

Im Gegensatz zum Stand der Technik können bei der Erfindung allen Rädern unterschiedliche Schlupfsollwerte vorgegeben werden.

### I Zu stark untersteuerndes Fahrverhalten:

Die Schräglaufwinkel an Vorder- und Hinterachse besitzen gleiches Vorzeichen, der Schräglaufwinkel an der Vorderachse ist jedoch betragsmäßig deutlich größer als an der Hinterachse. Durch eine Absenkung des Schlupfsollwertes am kurvenäußeren Vorderrad wird sowohl die Seitenführungskraft vorne erhöht, als auch durch die gleichzeitige Reduzierung der Bremskraft ein schwaches Giermoment erzeugt. Beide Effekte verbessern die Lenkbarkeit. Dagegen wird der Schlupfsollwert der anderen Räder auf dem ursprünglichen Wert $\lambda*$ (wie Geradeaus-Bremsung) beibehalten, da sich bei einer Schlupfabsenkung die Effekte zumindest teilweise auslöschen würden.

### II Übersteuerndes Fahrverhalten:

Die Schräglaufwinkel an Vorder- und Hinterachse besitzen gleiches Vorzeichen, der Schräglaufwinkel an der Hinterachse ist betragsmäßig größer als an der Vorderachse. Übersteuerndes Fahrverhalten wird aber auch schon erkannt, wenn ein zu steiler Anstieg der Schräglaufwinkel der Hinterachse gemessen wird (PD-Regelung).

Analog zu den Überlegungen bei I. muß in diesem Fall die Absenkung des Schlupfsollwertes am kurveninneren Hinterrad erfolgen. Bei den Fahrversuchen hat sich gezeigt, daß eine gleichzeitige Erhöhung des Schlupfwertes am kurvenäußeren Vorderrad vorteilhaft ist, um diese kritische Fahrsituation sicherer zu kontrollieren. Dabei steigt z.B. auf Eis der tatsächliche Schlupf an diesem Vorderrad kurzzeitig auf einen Wert an, den ein nach dem Optimizer-Prinzip arbeitender Algorithmus bei Schräglauf ebenfalls erreichen oder gar überschreiten würde.

III Die Schräglaufwinkel an Vorder- und Hinterachse besitzen unterschiedliches Vorzeichen:

Dieser Fahrzustand ergibt sich z.B. auf μ-Split-Fahrbahnen oder wenn der Fahrer versucht, das übersteuernde Fahrzeug durch schnelles Gegenlenken abzufangen, (diese Situation erübrigt sich bei dem beschriebenen Konzept). Durch eine Absenkung des Schlupfsollwertes am Vorder- und Hinterrad einer Fahrzeugseite wird das stabilisierende Gegengiermoment sowohl durch größere Seitenführungskräfte als auch durch die einseitig verringerten Bremskräfte erhöht.

Die Realisierung der erwähnten Regelungskonzepte setzt voraus, daß außer dem Schlupf auch die Schräglaufwinkel aller vier Räder meßbar oder aber mindestens beobachtbar sind. Ein korrelationsoptischer Sensor liefert die Geschwindigkeit an diesen Punkt nach Betrag und Richtung. Ein Wendekreisel gibt die Winkelgeschwindigkeit des Fahrzeuges um die Hochachse (Gierwinkelgeschwindigkeit) an.

Aus diesen Informationen lassen sich die exakten Geschwindigkeiten an den Radmittelpunkten (Referenzgeschwindigkeiten) und die Schwimmwinkel berechnen. Ebenfalls nötig sind übliche Radsensoren und ein Lenkwinkelsensor, um die letztlich interessiereden Größen Schlupf und Schräglaufwinkel bestimmen zu können.

Ein korrelationsoptische Sensor ist zur Bestimmung der Quergeschwindigkeit nicht zwingend erforderlich. Diese kann näherungsweise auch mit Hilfe anderer Sensoren (z.B. Querbeschleunigungsgeber) ermittelt werden. Am Markt werden auch andere Gierwinkelgeschwindigkeitsmesser angeboten.

Als Stellglied ist ein 4-Kanal-ABS-hydroaggregat mit 3/3-Magnet-Ventilen anwendbar. Aber auch andere Bremsdruck-Modulatoren, wie z.B. Plunger-Systeme, sind geeignet.

Anhand der Zeichnung sollen Ausführungsbeispiele der Erfindung näher erläutert werden.

Es zeigen:

Fig. 1 ein Schema eines erfindungsgemäß ausgerüsteten Fahrzeugs,

Fig. 2 ein Flußdiagramm,

Fig. 3-6 Diagramme.

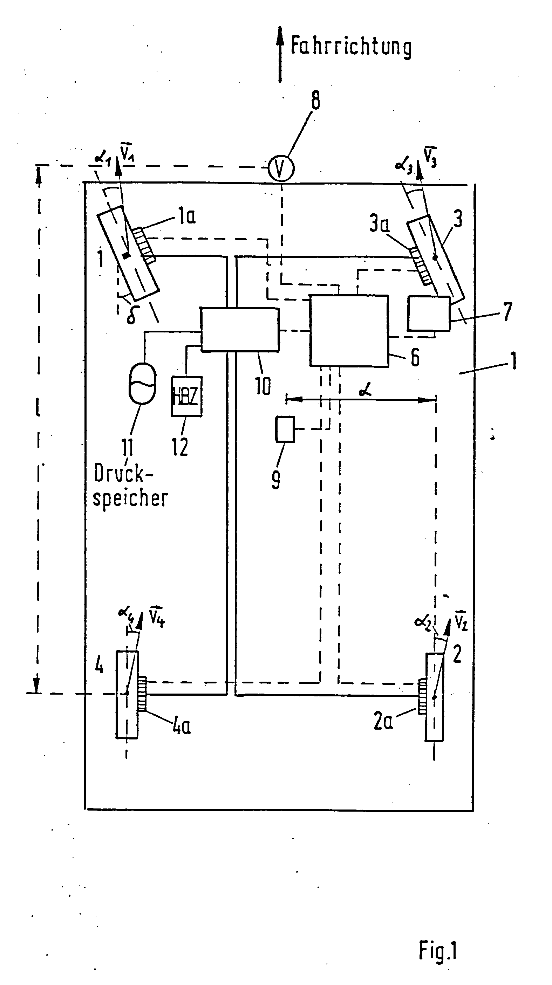

In Fig. 1 ist mit 5 ein Wagenkasten und mit 1 bis 4 sind Fahrzeugräder bezeichnet. Diesen sind Radsensoren 1a bis 4a zugeordnet, deren Signale einer Auswerteschaltung zugeführt werden. Weiter sind ein Lenkwinkelsensor 7, ein Absolutgeschwindigkeitsgeber 8 und ein Giergeschwindigkeitsgeber 9 vorgesehen. Mittels eines Modulators 10 und einer Druckquelle 11 wird der Bremsdruck eines Hauptbremszylinders an den Radbremsen variiert.

Die Schräglaufwinkel $\alpha_3$ uns $\alpha_4$ an den Rädern 3 und 4 sind gegeben durch

$$\tan \alpha_3 = \frac{V_{y3}}{V_{x3}} - \delta$$

wobei δ der Lenkwinkel ist und

$$\tan \alpha_4 = \frac{V_{y4}}{V_{x4}} .$$

Hierin sind $V_{xn}$ bzw. $V_{yn}$ die Geschwindigkeiten des Mittelpunkts des n.-ten Rads in Vorwärts- und Querrichtung. Diese Größen ergeben sich aus den vom Sensor 8 gemessenen Werten $V_x$ und $V_y$ und der vom Sensor 9 gemessenen Giergeschwindigkeit φ unter Berücksichtigung der Abstände l und d von dem Sensor und sind für das Rad $R_2$ gegeben durch:

$$V_{x2} = V_x - \phi° \cdot d$$
$$V_{y2} = V_y - \phi° \cdot l$$

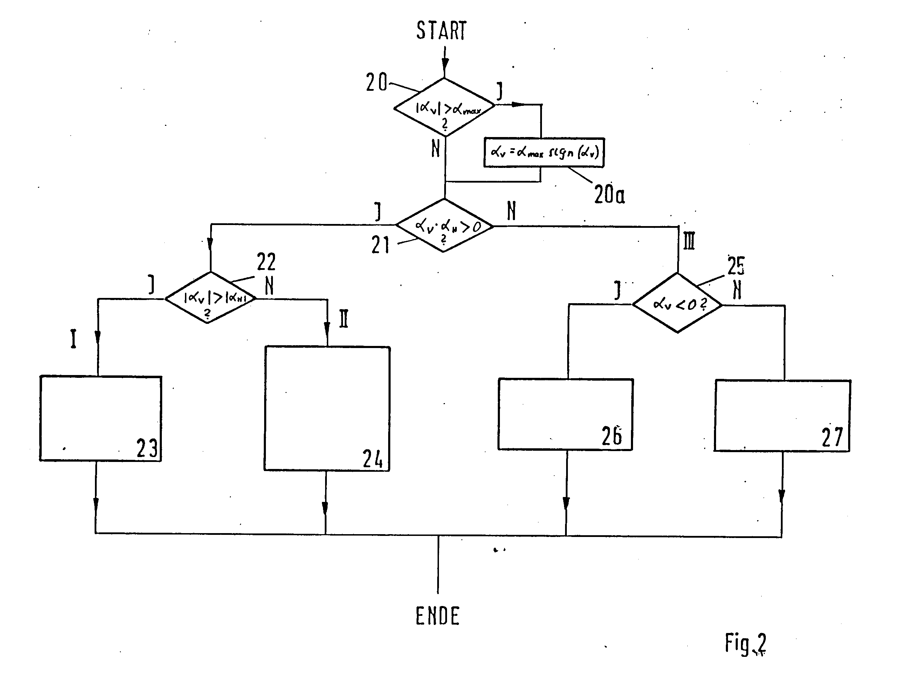

Fig. 2 zeigt Möglichkeiten wie und wovon abhängig man den Referenzschlupfwert verändern kann. In 20 wird geprüft, ob der Betrag des Schräglaufwinkels der Vorderachse $\alpha_v$ größer als ein Maximalbetrag $\alpha_{max}$ ist. Ist dies der Fall, wird er auf $\alpha_{max}$ begrenzt und mit dem Vorzeichen versehen weitergegeben (Block 20a). Der Block 21 prüft, ob die Schräglaufwinkel vorn und hinten $\alpha_V$ und $\alpha_H$ gleiches Vorzeichen haben. Ist dies der Fall, so prüft ein Block 22, welcher der Schräglaufwinkel größer ist. Ist $\alpha_V$ größer, so wird das λ* für das kurvenäußere Vorderrad vermindert (Block 23), ist $\alpha_H$ größer, so erfolgt die Verminderung von λ* für das kurveninnere Hinterrad (VBlock 24). Eventuell wird λ* noch für das kurvenäußere Vorderrad erhöht.

Haben die Werte $\alpha_V$ und $\alpha_H$ unterschiedliche Vorzeichen, so stellt ein Block 25 fest, ob $\alpha_V$ negativ ist. Ist dies der Fall, so werden die $\lambda*$ für die Räder auf der linken Fahrzeugseite abgesenkt (Block 26), ist dies nicht der Fall, so erfolgt die Absenkung für die rechte Fahrzeugseite (Block 27).

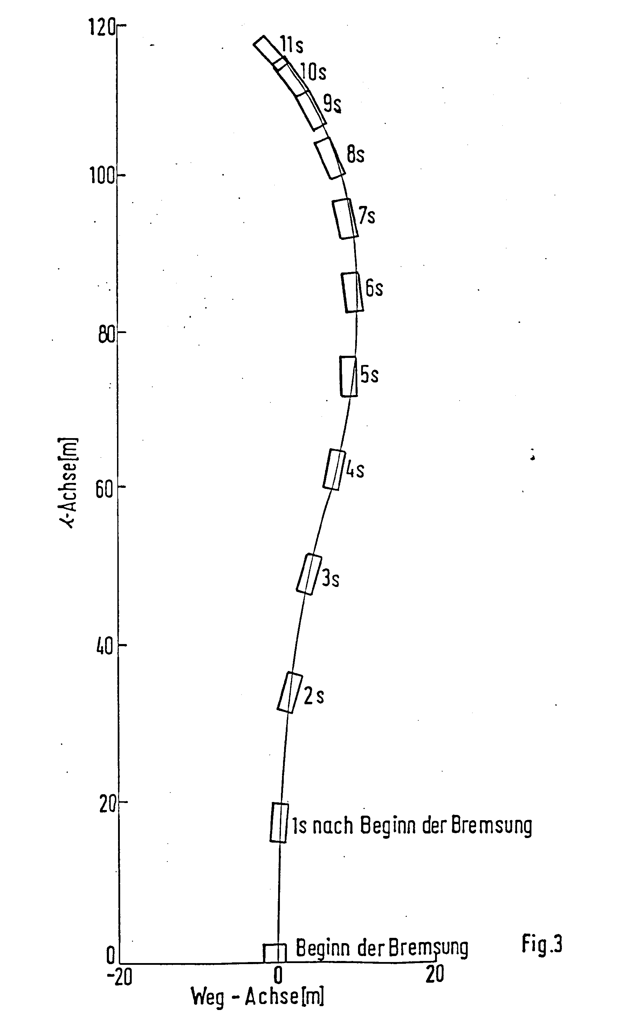

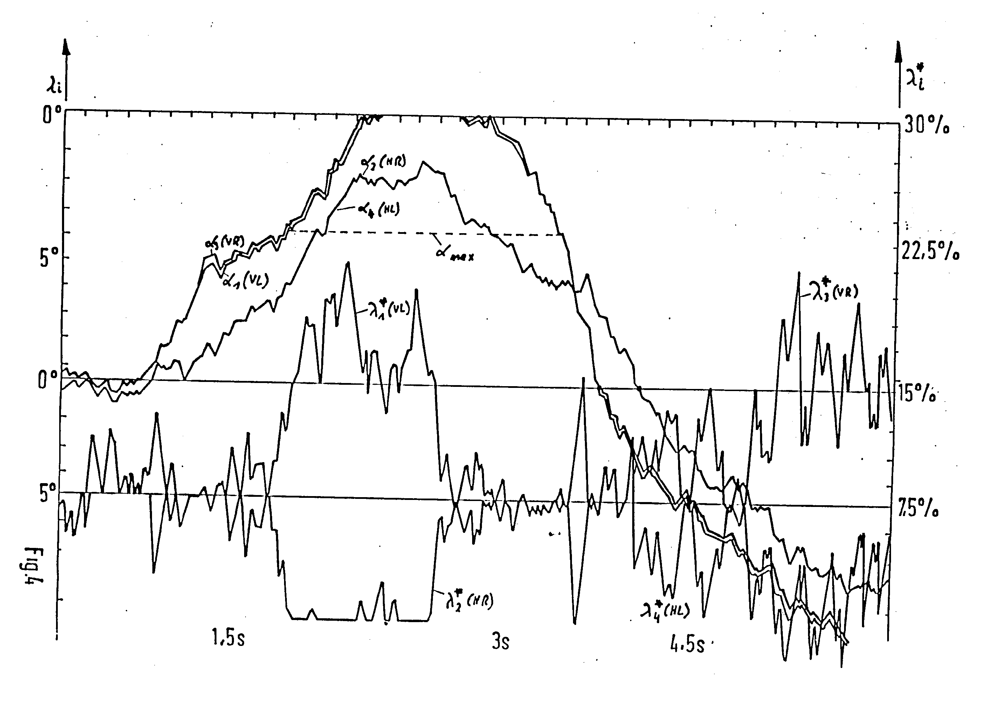

Bei einem doppelten Lenksprung kann nur durch einen starken Regler-Eingriff (sh. Fig. 3 t > 1.5 s) das Ausbrechen des Fahrzeuges (abruptes Anwachsen des Schwimmwinkels bzw. der Schräglaufwinkel der Hinterachse) verhindert werden. Ein ähnliches Verhalten wie während der Linkskurve (t < 5 s) erkennt man auch wieder während der Rechtskurve (t > 5 s) (Fig. 3 und 4).

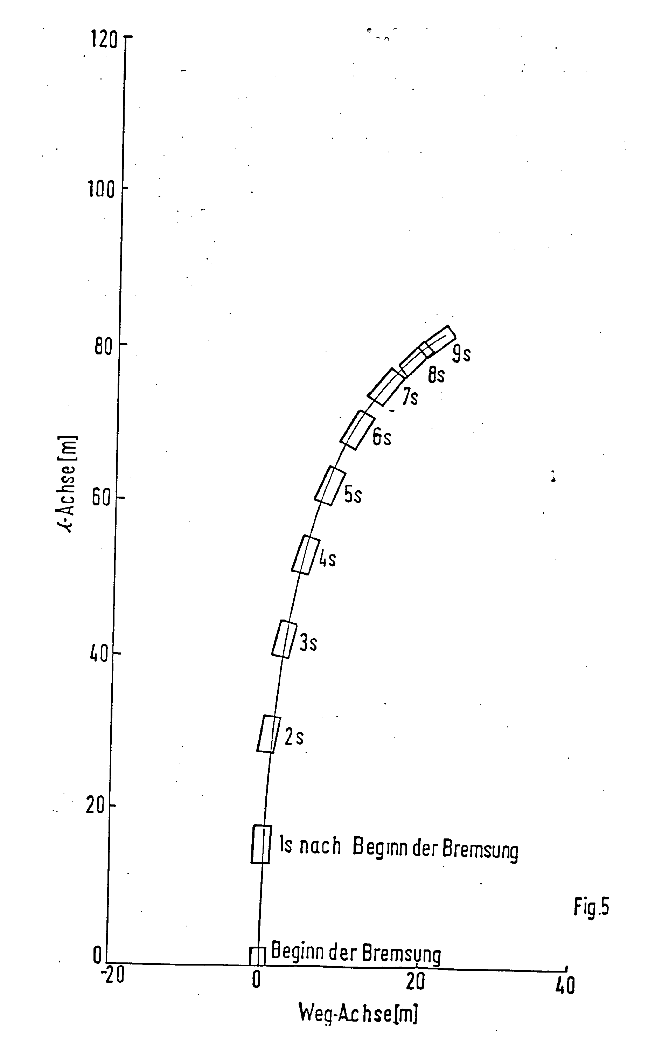

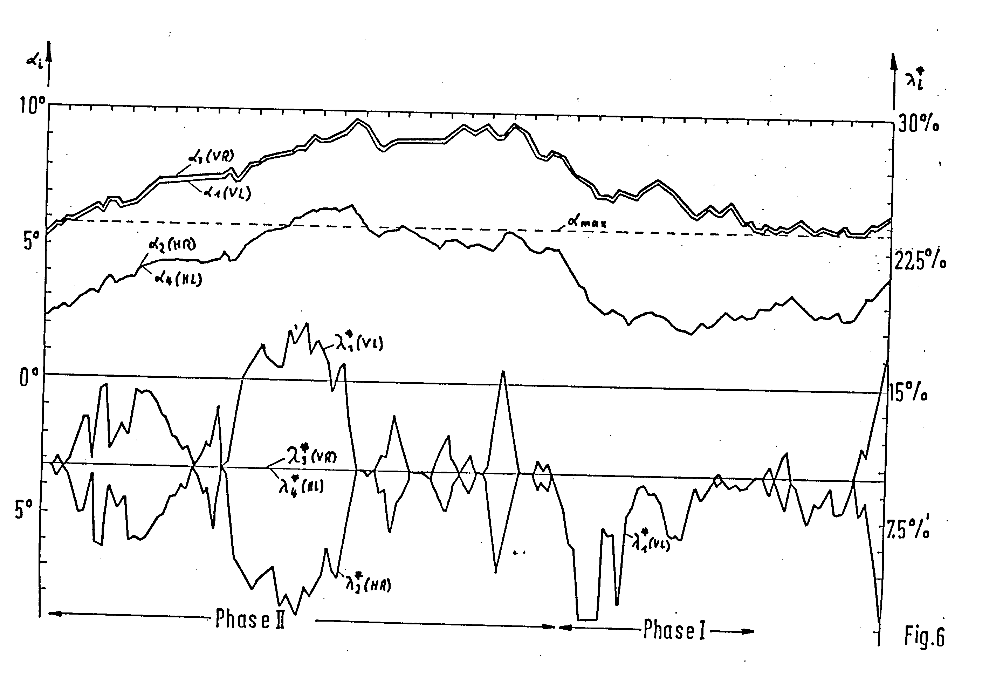

Bei einem einfachen Lenksprung (z.B. 80° nach links) wird zunächst durch den Eingriff auf $\lambda_1*$ und $\lambda_2*$ das Ausbrechen verhindert. Etwa ab t = 3 sec wird der Schlupf am kurvenäußeren Vorderrad abgesenkt, um dort größere Seitenführungskräfte zu erzielen. Die Wirksamkeit dieser Maßnahme zeigt sich im Wiederaufstieg der Schräglaufwinkel an der Vorderachse (Fig. 5 und 6).

Die Stabilisierung des Fahrzeuges ist auch im ungebremsten (oder auch schwach gebremsten) Fall eingeschränkt möglich. Da die Schlupfabsenkung entfällt, erübrigt sich ein Regeleingriff in den Phasen I und III. Lediglich in der Phase II, die aber durch das Übersteuern die gefährlichste Fahrsituation darstellt, kann durch Schlupf- bzw. Druck-Erhöhung am kurvenäußeren Vorderrad eingegriffen werden. An diesem Rad wirkt nur eine Bremskraft und nur noch eine verminderte Seitenführungskraft, wodurch ein Giermoment entsteht, das der Übersteuerungstendenz entgegenwirkt.

Zur Realisierung dieses erweiterten Regelkonzepts ist jedoch eine Druckversorgung entsprechend den ASR-Konzepten mit Bremseingriff erforderlich, die es erlaubt Druck in den Radbremszylindern aufzubauen, auch wenn der Fahrer nicht auf das Bremspedal tritt (Fig. 1).

Neben einer Verbesserung der Lenkfähigkeit wird die Stabilität des Fahrzeuges weitgehend garantiert. Der Fahrer bestimmt zwar weiterhin die Fahrtrichtung des Fahrzeuges, ihm wird aber die Aufgabe der Stabilisierung des Fahrzeuges (z.B. schnelles Gegenlenken bei ausbrechendem Fahrzeug) abgenommen. Die Anforderungen an den Fahrer - insbesondere bei winterlichen Verhältnissen - nehmen somit deutlich ab. Darüber hinaus wird eine bessere Auswirkung des Kraftschlußpotentials in Reifenquerrichtung ermöglicht.

## Patentansprüche

1. Verfahren zur Erhöhung der Beherrschbarkeit eines zweiachsigen Fahrzeugs, das mit einem Bremsdruckregler ausgerüstet ist, der die Bremsdrücke an den einzelnen Rädern nach Maßgabe des augenblicklichen Bremsschlupfs $\lambda i$ an den Rädern in Vergleich zu vorgegebenen, variablen Schlupfsollwerten $\lambda*i$ für die einzelnen Räder variiert, dadurch gekennzeichnet, daß wenigstens die Schräglaufwinkel $\alpha i$ je eines Rads einer Fahrzeugachse ermittelt werden und daß durch Auswerten der für die Achsen ermittelten Schräglaufwinkel die Schlupfsollwerte $\lambda*i$ im Sinne einer größeren Fahrzeugbeherrschbarkeit variiert werden.

2. Verfahren nach Anspruch 1, dadurch gekennzeichnet, daß ohne Bremsung oder bei nur schwacher Bremsung Druck eingesteuert und der Referenzschlupf erhöht wird.

3. Verfahren nach Anspruch 1 oder 2, dadurch gekennzeichnet, daß bei gleichem Vorzeichen der Schräglaufwinkel $\alpha_V$ und $\alpha_H$ von zwei Rädern verschiedener Achsen jedoch betragsmäßig größerem Schräglaufwinkel $\alpha_V$ des Rads der Vorderachse der Schlupfsollwert $\lambda*$ am kurvenäußeren Vorderrad abgesenkt wird.

4. Verfahren nach Anspruch 1 oder 2, dadurch gekennzeichnet, daß bei gleichem Vorzeichen der Schräglaufwinkel $\alpha_V$ und $\alpha_H$ von zwei Rädern verschiedener Achsen jedoch betragsmäßig größerem Schräglaufswinkel $\alpha_H$ des Rads der Hinterachse der Schlupfsollwert $\lambda*$ des kurveninneren Hinterrads abgesenkt wird.

5. Verfahren nach Anspruch 1 oder 2, dadurch gekennzeichnet, daß bei gleichem Vorzeichen der Schräglaufwinkel $\alpha_V$ und $\alpha_H$ von zwei Rädern verschiedener Achsen jedoch betragsmäßig größerem Schräglaufwinkel $\alpha_H$ des Rads der Hinterachse der Schlupfsollwert $\lambda*$ des kurvenäußeren Vorderrads erhöht wird.

6. Verfahren nach Anspruch 1 oder 2, dadurch gekennzeichnet, daß bei unterschiedlichen Vorzeichen der Schräglaufwinkel $\alpha_V$ und $\alpha_H$ von zwei Rädern verschiedener Achsen und negativen Wert für $\alpha_V$ die Schlupfsollwerte $\lambda*$ für die Räder der linken Fahrzeugseite abgesenkt werden.

7. Verfahren nach Anspruch 1 oder 2, dadurch gekennzeichnet, daß bei unterschiedlichen Vorzeichen der Schräglaufwinkel $\alpha_V$ und $\alpha_H$ von zwei Rädern verschiedener Achsen und positivem Wert für $\alpha_V$ die Schlupf-

sollwerte λ* für die Räder der rechten Fahrzeugseite abgesenkt werden.

8. Verfahren nach einem der Ansprüche 1 bis 7, dadurch gekennzeichnet, daß die Schräglaufwinkel der Räder der Vorderachse nach oben begrenzt werden.

## Claims

1. Method for increasing the controllability of a two-axle vehicle which is equipped with a brake pressure control system which varies the brake pressures at the individual wheels according to the amount of the instantaneous brake slip λi at the wheels, as compared with specified, variable required slip values λ*i for the individual wheels, characterised in that the skew running angles αi at least are determined for each wheel of a vehicle axle and in that the required slip values λ*i are varied in the direction of increased vehicle controllability by analysing the skew running angles determined for the axles.

2. Method according to Claim 1, characterised in that pressure is introduced and the reference slip is increased when no braking or only weak braking is taking place.

3. Method according to Claim 1 or 2, characterised in that in the case of the same sign for the skew running angles $\alpha_V$ and $\alpha_H$ of two wheels on different axles but a skew running angle $\alpha_V$ of larger magnitude for the wheel of the front axle, the required slip value λ* is reduced at the front wheel on the outside of the curve.

4. Method according to Claim 1 or 2, characterised in that in the case of the same sign for the skew running angles $\alpha_V$ and $\alpha_H$ of two wheels on different axles but a skew running angle $\alpha_H$ of larger magnitude for the wheel of the rear axle, the required slip value λ* is reduced at the rear wheel on the inside of the curve.

5. Method according to Claim 1 or 2, characterised in that in the case of the same sign for the skew running angles $\alpha_V$ and $\alpha_H$ of two wheels on different axles but a skew running angle $\alpha_H$ of larger magnitude for the wheel of the rear axle, the required slip value λ* is increased at the front wheel on the outside of the curve.

6. Method according to Claim 1 or 2, characterised in that in the case of different signs for the skew running angles $\alpha_V$ and $\alpha_H$ of two wheels of different axles and a negative value for $\alpha_V$, the required slip values λ* for the wheels of the left-hand side of the vehicle are reduced.

7. Method according to Claim 1 or 2, characterised in that in the case of different signs for the skew running angles $\alpha_V$ and $\alpha_H$ of two wheels of different axles and a positive value for $\alpha_V$, the required slip values λ* for the wheels of the right-hand side of the vehicle are reduced.

8. Method according to one of Claims 1 to 7, characterised in that the skew running angles of the wheels of the front axle are limited in the upward direction.

## Revendications

1. Procédé pour améliorer la tenue de route d'un véhicule à deux essieux équipé d'un régulateur de pression de frein qui modifie la pression de frein sur les différentes roues après indication du patinage instantané de frein (λi) sur les roues, par comparaison avec des valeurs de consigne, variables de patinage (λ*i) pour les différentes roues, procédé caractérisé en ce qu'on détermine au moins les angles de déplacement oblique (αi) de chaque roue d'un essieu du véhicule et par exploitation des angles de déplacement oblique déterminés pour les roues on modifie les valeurs de consigne de patinage (λ*i) dans le sens d'une plus grande tenue de route du véhicule.

2. Procédé selon la revendication 1, caractérisé en ce que sans freinage ou avec un freinage fortement atténué, on commande la pression et on augmente le patinage de référence.

3. Procédé selon la revendication 1 ou 2, caractérisé en ce que, on abaisse la valeur de consigne de patinage

$\alpha*$ de la roue avant à l'extérieur de la courbe pour des angles de déplacement oblique ($\alpha_V$) et ($\alpha_H$) de même signe, de deux roues appartenant à des essieux différents, l'angle de déplacement oblique $\alpha_V$ de la roue avant ayant toutefois l'amplitude la plus grande.

4. Dispositif selon l'une des revendications 1 ou 2, caractérisé en ce qu'on abaisse la valeur de consigne de patinage ($\lambda*$) de la roue arrière à l'intérieur de la courbe pour un même signe algébrique des angles de déplacement oblique ($\alpha_V$) et ($\alpha_H$) de deux roues appartenant à des essieux différents, l'angle de déplacement en biais ($\alpha_H$) de la roue de l'essieu arrière ayant toutefois la plus grande amplitude.

5. Procédé selon les revendications 1 ou 2, caractérisé en ce que pour un même signe algébrique des angles de déplacement oblique ($\alpha_V$) et ($\alpha_H$) de deux roues appartenant à des essieux différents, on augmente le coefficient de consigne de patinage ($\lambda*$) de la roue avant à l'extérieur de la courbe, l'angle de déplacement oblique ($\alpha_H$) de la roue de l'essieu arrière ayant la plus grande amplitude.

6. Procédé selon les revendications 1 ou 2, caractérisé en ce que pour des signes algébriques différents des angles de déplacement oblique ($\alpha_V$) et ($\alpha_H$) de deux roues appartenant à des essieux différents et une valeur négative pour ($\alpha_V$), on diminue les valeurs de consigne de patinage ($\lambda*$) des roues du côté gauche du véhicule.

7. Procédé selon les revendications 1 ou 2, caractérisé en ce que pour des signes algébriques différents des angles de déplacement oblique ($\alpha_V$) et ($\alpha_H$) de deux roues appartenant à des essieux différents et pour une valeur positive de ($\alpha_V$) on abaisse les valeurs de consigne de patinage ($\lambda*$) des roues du côté droit du véhicule.

8. Procédé selon l'une des revendications 1 à 7, caractérisé en ce que l'angle de déplacement oblique des roues de l'essieu avant est limité vers le haut.

Fig.1

Fig. 2

Fig.3

Fig.4

Fig.5

Fig.6